# FASCICULE DE BREVET EUROPEEN

(11) **EP 3 198 515 B1**
(45) Date de publication et mention de la délivrance du brevet: **20.11.2019**
(21) Numéro de dépôt: 15787251.6
(22) Date de dépôt: 23.09.2015
(51) Int. Cl.: G06F 21/75, G06F 21/72, G06F 21/55, H04L 9/00

(54) **PROCEDE DE CONTREMESURE CONTRE UNE ATTAQUE PAR ANALYSE DE CONSOMMATION ELECTRIQUE POUR DISPOSITIF CRYPTOGRAPHIQUE**
VERFAHREN ZUR GEGENMASSNAHME GEGEN EINEN ANGRIFF DURCH ANALYSE DES STROMVERBRAUCHS FÜR EINE KRYPTOGRAFISCHE VORRICHTUNG
METHOD OF COUNTERMEASURE AGAINST AN ATTACK BY ANALYSIS OF ELECTRICAL CONSUMPTION FOR CRYPTOGRAPHIC DEVICE

(30) Priorité: 23.09.2014 FR 1458951
(43) Date de publication de la demande: 02.08.2017
(73) Titulaire: VERIMATRIX, 13590 Meyreuil (FR)
(72) Inventeur: MARTIN, Michel, 13840 Rognes (FR)
(74) Mandataire: de Roquemaurel, Bruno
(86) Numéro de dépôt international: PCT/FR2015/052544
(87) Numéro de publication internationale: WO 2016/046495

(56) Documents cités:
- EP-A1- 1 098 267
- EP-A2- 1 022 683
- EP-A2- 1 113 386
- WO-A1-02/080094
- WO-A2-2004/025444
- GB-A- 2 398 139
- US-A1- 2012 210 138
- US-A1- 2014 132 337
- US-B1- 6 507 130
- SHAMIR A ED - KOC C K ET AL: "PROTECTING SMART CARDS FROM PASSIVE POWER ANALYSIS WITH DETACHED POWER SUPPLIES", CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS; [LECTURE NOTES IN COMPUTER SCIENCE], BERLIN : SPRINGER, DE, vol. VOL. 1965, 17 août 2000 (2000-08-17), pages 71-77, XP001049129, ISBN: 978-3-540-41455-1

## Description

La présente invention concerne les dispositifs cryptographiques et plus particulièrement, la protection de tels dispositifs contre des attaques par analyse de leur consommation électrique. La présente invention s'applique notamment aux cartes à puce, aux processeurs sécurisés, au téléphones sécurisés, et plus généralement à tout dispositif à microcircuit mémorisant des données sensibles et donc devant être protégé contre des attaques par analyse de consommation électrique.

Les dispositifs à microcircuit manipulant des données sensibles font parfois l'objet d'attaques visant à déterminer ces données. Parmi les attaques connues, les attaques de type SPA (Simple Power Analysis) ou DPA (Differential Power Analysis) consistent à effectuer de nombreuses mesures de courant sur une borne d'alimentation microcircuit lors de l'exécution d'un programme ou d'un traitement de données par le microcircuit, en faisant varier des données d'entrée. Les mesures obtenues sont exploitées par une analyse statistique pour en déduire des données sensibles, traitées ou utilisées par le microcircuit.

Diverses techniques ont été développées afin de lutter contre ces attaques. Ainsi, il est par exemple connu de diminuer les courants de fuite induits par les traitements, ou d'augmenter le bruit afin de diminuer le rapport signal sur bruit des variations du courant d'alimentation. Il a également été envisagé d'équilibrer les circuits sensibles de manière à ce que le traitement d'un bit à 0 ait une même signature de consommation électrique que le traitement d'un bit à 1. On a également proposé d'introduire de la gigue dans le signal d'horloge, ou d'introduire des calculs factices ou des cycles de calcul factices. Il est également possible de masquer des données intermédiaires dans les algorithmes symétriques. Cependant ces techniques conduisent à augmenter la taille et la complexité des circuits sensibles, ou à dégrader leurs performances (consommation électrique et temps d'exécution des calculs). Il est également connu d'utiliser des condensateurs ayant une capacité relativement élevée pour filtrer les variations de courant sur l'entrée d'alimentation du microcircuit. Plus la capacité du condensateur est élevée, plus le masquage des variations de consommation électrique du circuit est efficace. Cependant, plus la capacité du condensateur est élevée, plus le volume de ce dernier est important. Les condensateurs intégrables dans un microcircuit présentent actuellement une capacité insuffisante pour prévenir des attaques de type SPA ou DPA.

Il est donc souhaitable de mettre en œuvre un dispositif de contremesure visant à protéger des circuits manipulant des données sensibles contre divers types d'attaques de type SPA et DPA. Il est également souhaitable de ne pas dégrader les performances et l'encombrement du circuit à protéger.

Le document GB2398139 décrit une carte à puce qui comprend un dispositif de circuit intégré contenant des informations sécurisées et un circuit de protection configuré pour protéger le dispositif de circuit intégré en empêchant la récupération non autorisée des informations sécurisées à l'aide d'une technique d'analyse de puissance. Ceci est réalisé en maintenant au moins une ligne d'alimentation qui est couplée électriquement au dispositif à circuit intégré à une tension sensiblement uniforme lorsque le dispositif à circuit intégré est actif. Cette tension uniforme sert à masquer les opérations effectuées par le dispositif à circuit intégré, et dissimule ainsi ces opérations à un matériel externe pouvant être conçu pour prendre en charge la technique d'analyse de puissance. En particulier, un condensateur variable est prévu pour fournir un courant de déplacement à la ligne d'alimentation et au circuit intégré, tandis que la capacité du condensateur diminue progressivement à un taux approprié pour supporter une tension d'alimentation constante sur la ligne d'alimentation. Cette carte à puce n'a aucune source d'énergie interne au microcircuit

Des modes de réalisation concernent un procédé de contremesure dans un microcircuit, le procédé comprenant des étapes consistant à : sélectionner, par le microcircuit, à chaque cycle d'un signal d'horloge un mode d'alimentation d'un composant interne au microcircuit, parmi un premier mode d'alimentation dans lequel le composant est totalement alimenté par un premier circuit d'alimentation connecté à une entrée d'alimentation du microcircuit, et au moins un second mode d'alimentation dans lequel le composant est au moins partiellement alimenté par un second circuit d'alimentation interne au microcircuit, le second circuit d'alimentation étant isolé de l'extérieur du microcircuit pendant qu'il alimente le composant, charger un condensateur du second circuit d'alimentation par une source d'énergie interne au microcircuit, pendant que le premier mode d'alimentation est sélectionné, décharger le condensateur pour alimenter le composant pendant que le second mode d'alimentation est sélectionné. Le mode d'alimentation sélectionné peut être activé pendant que le composant est actif.

Selon un mode de réalisation, le composant est alimenté par le second circuit d'alimentation à des cycles du signal d'horloge déterminés aléatoirement, ou en fonction de l'état de charge d'un condensateur du second circuit d'alimentation, ou bien en fonction d'un critère de sensibilité d'opérations exécutées à chaque cycle du signal d'horloge.

Selon un mode de réalisation, le signal d'horloge est fourni au composant pour cadencer des opérations exécutées par le composant.

Selon un mode de réalisation, le second mode d'alimentation est sélectionné pendant une durée inférieure à la durée d'un cycle du signal d'horloge moins un temps de charge du condensateur.

Selon un mode de réalisation, un premier interrupteur est interposé sur une liaison d'alimentation du composant, connectée au premier circuit d'alimentation, le procédé comprenant une étape de charge d'un condensateur du second circuit d'alimentation lorsque le premier interrupteur est fermé, et de décharge du condensateur pour alimenter le composant lorsque le premier interrupteur est ouvert.

Selon un mode de réalisation, un second interrupteur est interposé sur une liaison d'alimentation reliant le second circuit d'alimentation à une entrée d'alimentation du composant, le condensateur étant chargé par la source d'énergie interne au microcircuit lorsque le second interrupteur est ouvert, et déchargé pour alimenter le composant lorsque le second interrupteur est fermé.

Selon un mode de réalisation, le procédé comprend des étapes consistant à : exécuter par le composant plusieurs fois une opération avec le premier interrupteur ouvert pendant des durées différentes, le condensateur étant dans un état chargé lors de l'ouverture du premier interrupteur, à chaque exécution de l'opération, mémoriser une donnée fournie par le circuit de calcul, et déterminer une durée maximum pendant laquelle le premier interrupteur peut être ouvert sans perturber l'exécution de l'opération en comparant les données mémorisées.

Selon un mode de réalisation, le procédé comprend des étapes consistant à définir et stocker dans un registre un mot de commande comportant un bit de commande par cycle d'un ensemble de cycles du signal d'horloge, et à sélectionner l'un ou l'autre des premier et second modes d'alimentation, selon la valeur du bit de commande correspondant au cycle d'horloge en cours dans le registre.

Des modes de réalisation concernent également un microcircuit comprenant : un composant interne au microcircuit, un premier circuit d'alimentation connecté à une entrée d'alimentation du microcircuit, un second circuit d'alimentation interne au microcircuit, et un circuit de commande configuré pour mettre en œuvre le procédé défini précédemment.

Selon un mode de réalisation, le Microcircuit comprend un premier interrupteur interposé sur une ligne d'alimentation du composant, et qui est fermé par le circuit de commande pour alimenter le composant par le premier circuit d'alimentation, et ouvert par le circuit de commande pour alimenter le composant par le second circuit d'alimentation.

Selon un mode de réalisation, le second circuit d'alimentation comprend un premier condensateur qui est chargé pendant que le premier interrupteur est fermé, et qui alimente le composant en se déchargeant pendant que le premier interrupteur est ouvert.

Selon un mode de réalisation, le microcircuit comprend un second interrupteur interposé sur une liaison d'alimentation reliant le second circuit d'alimentation à une entrée d'alimentation du composant, le premier condensateur étant chargé par une source d'énergie interne au microcircuit lorsque le second interrupteur est ouvert, et déchargé pour alimenter le composant lorsque le second interrupteur est fermé.

Selon un mode de réalisation, le microcircuit comprend un registre pour mémoriser un mot de commande comportant au moins un bit, l'état du bit indiquant si le premier interrupteur doit être ouvert ou fermé durant un cycle de calcul d'un ensemble de cycles de calcul exécutés par le composant.

Selon un mode de réalisation, le microcircuit comprend plusieurs composants comprenant chacun une entrée d'alimentation reliée au premier circuit d'alimentation par l'intermédiaire d'un interrupteur respectif, un condensateur étant connecté à chaque entrée d'alimentation, chaque interrupteur étant commandé en fonction des opérations exécutées par le composant connecté à l'interrupteur.

Selon un mode de réalisation, le microcircuit comprend plusieurs composants comprenant chacun une entrée d'alimentation reliée au premier circuit d'alimentation par l'intermédiaire d'un interrupteur respectif, un condensateur étant relié par l'intermédiaire d'un circuit de commutation à chaque entrée d'alimentation de composant, chaque interrupteur étant commandé en fonction des opérations exécutées par le composant connecté à l'interrupteur, le circuit de commutation étant configuré pour relier le condensateur à l'une des entrées d'alimentation de composant lorsque l'interrupteur connecté à cette entrée d'alimentation est ouvert.

Des exemples de réalisation de l'invention seront décrits dans ce qui suit, à titre non limitatif en relation avec les figures jointes parmi lesquelles :
la figure 1 représente schématiquement un exemple de microcircuit effectuant des calculs cryptographiques,
la figure 2 représente schématiquement un circuit d'alimentation électrique et un circuit sensible du microcircuit de la figure 1,
les figures 3A et 3B représentent des courbes de variation en fonction du temps, respectivement, d'un signal d'horloge et de l'intensité du courant à une entrée d'alimentation électrique du microcircuit, durant des calculs réalisés par un composant du microcircuit,
la figure 4 représente schématiquement un circuit d'alimentation électrique et un circuit sensible du microcircuit, selon un mode de réalisation,
la figure 5 représente schématiquement un circuit du circuit d'alimentation électrique de la figure 4,
les figures 6A, 6B et 6C représentent des courbes de variation en fonction du temps, respectivement, d'un signal d'horloge, d'un signal de contrôle et de l'intensité du courant à une entrée d'alimentation électrique du microcircuit, durant des calculs réalisés par un composant du microcircuit, le microcircuit étant équipé du circuit d'alimentation de la figure 4,
la figure 7 représente schématiquement un exemple de circuit d'alimentation électrique et plusieurs circuits sensibles du microcircuit, selon un autre mode de réalisation,
la figure 8 représente schématiquement un exemple de circuit d'alimentation électrique et plusieurs circuits sensibles du microcircuit, selon un autre mode de réalisation,
les figures 9, 10 et 11 représentent schématiquement un circuit d'alimentation électrique et un circuit sensible du microcircuit, selon d'autres mode de réalisation.

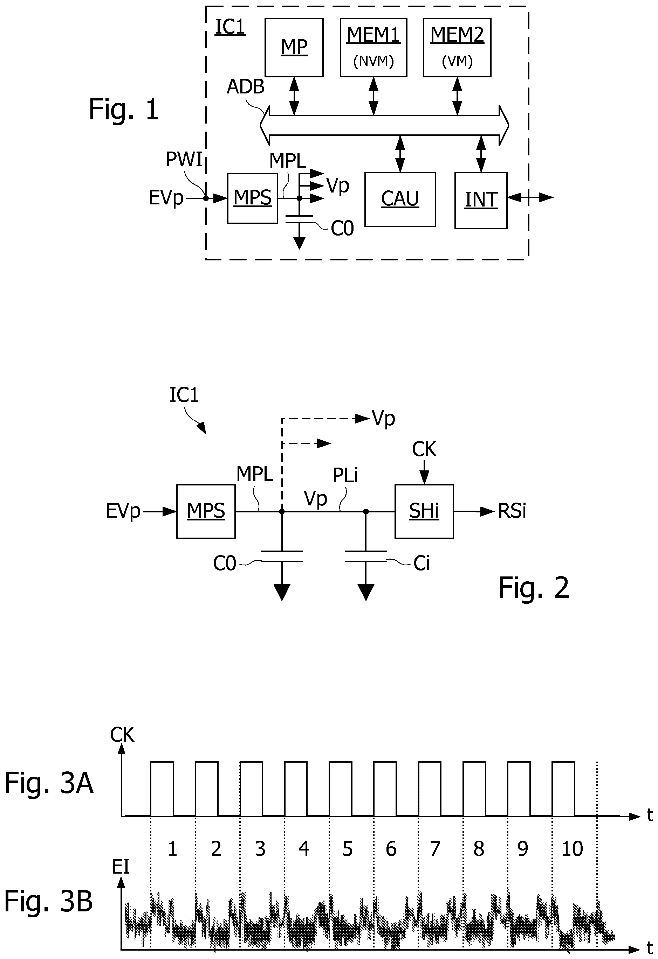

La figure 1 représente un exemple de microcircuit IC1 effectuant des calculs cryptographiques. Dans tout ce qui suit, le terme "microcircuit" désigne un circuit intégré ou une puce électronique, à l'intérieur duquel il est difficile d'introduire une sonde de capture de signaux pour accéder à des données sensibles du microcircuit. Le microcircuit IC1 comprend plusieurs composants tels qu'un processeur MP, par exemple de type microprocesseur ou microcontrôleur, une ou plusieurs mémoires volatiles et non volatiles MEM1, MEM2, une unité d'interface INT permettant au microcircuit IC1 de communiquer avec des équipements externes au microcircuit, et des bus d'adresse et de donnée ADB auxquels sont connectés le processeur, les mémoires et l'unité d'interface. Le microcircuit IC1 peut également comprendre des composants tels que des circuits de calcul incluant un circuit de calcul cryptographique CAU également connectés aux bus ADB. Les différents composants du microcircuit IC1 sont alimentés par un circuit d'alimentation MPS fournissant une tension d'alimentation Vp sur une liaison d'alimentation principale MPL reliée à un plan de masse du microcircuit IC1 par l'intermédiaire d'un condensateur de filtrage C0. Le circuit MPS peut lui-même être connecté à une borne d'alimentation PWI du microcircuit, recevant une tension d'alimentation externe EVp. A noter que la borne d'alimentation PWI peut également être une borne de connexion d'une antenne de communication, le microcircuit IC1, alors dit "sans contact" générant sa propre alimentation à partir de l'énergie reçue par l'antenne. Le circuit MPS peut comprendre des circuits tels qu'un régulateur de tension et une pompe de charge. Le circuit MPS peut également être une simple liaison avec la borne d'alimentation PWI.

La figure 2 représente plus en détail le circuit d'alimentation d'un des composants SHi du microcircuit IC1. Ici, le composant SHi peut représenter le processeur MP, un ou plusieurs circuits de calcul du microcircuit IC1, ou bien une partie de ceux-ci. Le composant SHi reçoit la tension d'alimentation Vp sur une entrée d'alimentation reliée à la liaison d'alimentation principale MPL par l'intermédiaire d'une liaison d'alimentation locale PLi. L'entrée d'alimentation du composant SHi est reliée au plan de masse par l'intermédiaire d'un condensateur Ci. Le condensateur Ci peut inclure les capacités parasites internes du composant SHi.

Les figures 3A, 3B représentent des courbes de variation en fonction du temps, respectivement, d'un signal d'horloge CK et de l'intensité du courant électrique EI sur la borne d'alimentation du microcircuit IC1 pendant l'exécution de calculs par l'un des composants SHi. Le signal d'horloge CK peut représenter des cycles ou des itérations d'un calcul, tels que des rondes d'un calcul cryptographique. La figure 3A représente 10 périodes du signal CK. Une corrélation peut être observée entre le signal d'horloge CK et le courant EI. Une attaque de type DPA consiste à acquérir plusieurs courbes du signal EI avec des données d'entrée différentes, et à corréler ces courbes pour en déduire une donnée sensible utilisée par le microcircuit.

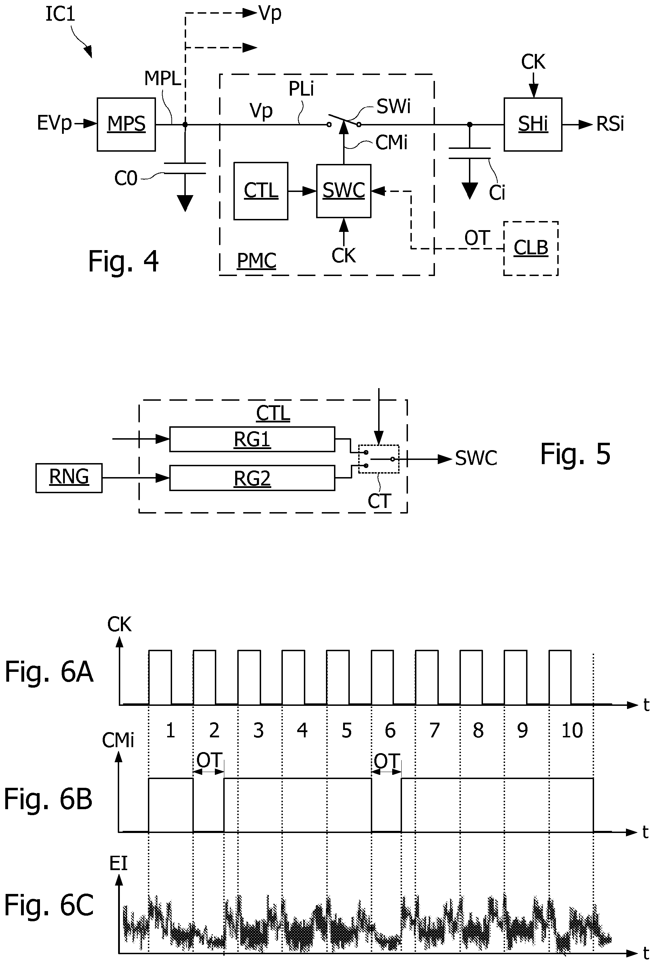

La figure 4 représente le circuit d'alimentation d'un des composants SHi du microcircuit IC1, selon un mode de réalisation. Le circuit d'alimentation du composant SHi diffère de celui représenté sur la figure 2 en ce qu'il comprend un circuit de contremesure PMC. Le circuit de contremesure PMC comprend un interrupteur SW1 interposé sur la liaison d'alimentation locale PLi du composant SHi, entre les condensateurs C0 et Ci. Ainsi, lorsque l'interrupteur SWi est fermé, le composant SHi est alimenté normalement par le circuit MPS. Lorsque cet interrupteur est ouvert, le composant SHi est alimenté temporairement par la décharge du condensateur Ci. Le circuit de contremesure PMC comprend également un circuit de commande SWC pour commander l'interrupteur SWi, et un circuit de contrôle CTL pour contrôler le circuit de commande SWC.

Comme le condensateur Ci est totalement intégré dans le microcircuit IC1 et découplé du circuit d'alimentation et donc de l'entrée d'alimentation PWI du microcircuit, lorsqu'il alimente le composant SHi, aucune connexion externe du microcircuit ne donne accès à l'entrée d'alimentation du composant SHi lorsque ce dernier est alimenté par le condensateur Ci. Il peut également être observé qu'une telle intégration du condensateur Ci offre une bien meilleure protection que la simple disposition de plusieurs circuits dans un même boitier de composant électronique. En effet, un boitier peut être relativement facilement ouvert pour accéder aux entrées et sorties des différents composants interconnectés dans le boitier. Au contraire, les microcircuits sont généralement formés sur une face dite "active" d'une plaquette en un matériau semi-conducteur, recouverte de différentes couches isolantes et conductrices dans lesquelles sont formées des lignes d'interconnexion, ces couches étant recouvertes d'une couche protectrice, généralement en résine, comportant des ouvertures pour les connexions externes du microcircuit. L'accès aux bornes de connexion du condensateur Ci ou aux lignes de connexion du circuit de contremesure nécessiterait donc de retirer la couche protectrice du microcircuit et une ou plusieurs couches d'interconnexion, et causerait donc la destruction du microcircuit. Ainsi, comme le circuit de contremesure PMC est également intégré dans le microcircuit, il n'est pas non plus possible de déterminer les périodes où le composant SHi est alimenté par le condensateur Ci.

Le circuit de commande SWC peut recevoir par ailleurs un signal de commande OT permettant d'ajuster la durée d'ouverture OT de l'interrupteur SW1. Le circuit de contrôle CTL transmet au circuit SWC un signal de commande CMi permettant de déclencher l'ouverture de l'interrupteur SHi pendant la durée OT. Les instants de déclenchement de l'ouverture de l'interrupteur SWi peuvent être prédéterminés ou déterminés de manière aléatoire, de même que la durée d'ouverture de l'interrupteur SWi avec une limite supérieure définie par la durée OT.

La durée d'ouverture OT peut être déterminée en fonction du temps de décharge du condensateur Ci de manière à ce que pendant cette durée, la tension d'alimentation fournie par le condensateur Ci soit suffisante pour maintenir le composant SHi opérationnel. La durée d'ouverture OT dépend de la capacité du condensateur Ci et de la consommation électrique du composant SHi, laquelle peut varier au cours du temps en fonction de l'opération exécutée par le composant SHi. Ainsi, le circuit de commande SWC peut être configuré pour ouvrir l'interrupteur SWi pendant la durée d'ouverture OT, sur commande du circuit de contrôle CTL. Le circuit de commande SWC peut également être configuré pour maintenir l'interrupteur SWi fermé durant une durée minimum de fermeture à la suite de l'ouverture de celui-ci, afin d'assurer la recharge du condensateur Ci avant que l'interrupteur SWi puisse être nouveau ouvert.

Il peut être prévu que la durée OT soit telle que la période du signal d'horloge CK soit supérieure ou égale à la somme de la durée OT et du temps de recharge du condensateur Ci. Alternativement, il peut être prévu que la durée OT soit comprise entre la période du signal d'horloge CK et la moitié de celle-ci, et d'interdire l'ouverture de l'interrupteur SWi durant au moins deux cycles d'horloge CK consécutifs. La durée OT peut également être choisie égale à une fraction de la période du signal d'horloge CK, l'interrupteur SWi étant maintenu fermé entre deux ouvertures consécutives de ce dernier, pendant une durée minimum qui soit suffisante pour permettre la recharge du condensateur Ci. Bien entendu, il est également possible que la durée OT soit supérieure à celle d'un ou plusieurs cycles du signal d'horloge CK.

La durée OT peut être déterminée par un dispositif de calibration CLB configuré pour exécuter plusieurs itérations au cours de chacune desquelles il active le composant SHi, ouvre l'interrupteur SWi pendant une durée variable et mémorise un résultat RSi fourni par le composant SHi en relation avec la durée d'ouverture de l'interrupteur SWi. La durée OT est choisie parmi les durées mémorisées qui permettent d'obtenir de la part du composant SHi un résultat correct, c'est-à-dire identique à celui obtenu sans ouvrir l'interrupteur SWi. Par exemple, la durée OT choisie peut être la plus longue durée qui permet d'obtenir un résultat correct.

Le circuit de commande SWC peut également recevoir le signal d'horloge CK fourni au composant SHi ou un signal de synchronisation fournit par le composant SHi, afin de synchroniser l'ouverture de l'interrupteur SWi en fonction des opérations réalisées par le composant SHi. Dans ce cas, le circuit SWC est configuré pour déclencher l'ouverture de l'interrupteur SWi lorsque les signaux CMi et CK sont simultanément dans un certain état, par exemple un état haut.

Le circuit de contrôle CTL peut être commandé par l'intermédiaire d'un mot de commande chargé dans un registre comprenant plusieurs cellules de mémorisation d'une donnée binaire. Chaque cellule du registre correspond à une itération du calcul exécuté par le composant SHi, la durée de chaque itération correspondant à la période du signal CK. La valeur de chaque cellule de registre détermine si le circuit CTL doit ou non commander au circuit SWC d'ouvrir l'interrupteur SWi pendant la durée OT, durant l'itération de calcul correspondant à la cellule de registre. Le mot de commande chargé dans le registre peut être déterminé en fonction d'un critère de sensibilité de chaque itération.

Selon un mode de réalisation, le registre de commande du circuit de contrôle CTL est couplé à un générateur de nombre aléatoire agencé pour charger sur commande un nouveau mot de commande dans le registre. Selon un autre mode de réalisation illustré par la figure 5, le circuit de contrôle comprend deux registres RG1, RG2, le registre RG2 étant couplé à un générateur de nombres aléatoires ou pseudo aléatoires RNG. Le registre RG1 peut être mis à jour par un composant du circuit IC1 tel que le processeur MP. La sortie des registres RG1, RG2 est reliée à l'entrée de commande du circuit SWC par l'intermédiaire d'un commutateur CT qui peut être commandé pour sélectionner l'un ou l'autre des deux registres RG1, RG2 à utiliser pour commander le circuit SWC. Si la durée CK - OT est inférieure au temps de charge du condensateur Ci, le mot de commande chargé dans le registre RG2 peut être modifié de manière à éviter qu'il comprenne deux bits consécutifs à 0 (dans le cas où un bit à 0 commande l'ouverture de l'interrupteur SWi) pour assurer la recharge du condensateur Ci entre deux ouvertures consécutives de l'interrupteur SWi.

Les figures 6A, 6B, 6C représentent des courbes de variation en fonction du temps, respectivement, du signal d'horloge CK, du signal de commande CMi de l'interrupteur SWi émis par le circuit de commande SWC, et de l'intensité du courant EI à l'entrée d'alimentation électrique du microcircuit IC1, durant des calculs réalisés par le composant SHi. Sur la figure 6B, le signal de commande CMi est maintenu dans un état haut, sauf durant des périodes du signal d'horloge CK (numérotées 2 et 6 dans l'exemple de la figure 6A) où il est placé à l'état bas. Il en résulte que les variations d'intensité de courant qui apparaissaient dans la courbe EI durant ces périodes 2 et 6 sur la figure 3B, dues à l'activité du composant SHi ne sont plus visibles dans le signal EI mesuré à l'entrée d'alimentation électrique du microcircuit IC1. Les variations de courant qui subsistent dans la courbe EI durant les périodes 2 et 6 correspondent au courant consommé par d'autres circuits du microcircuit IC1. L'ouverture de l'interrupteur SWi permet donc de masquer l'activité du composant SHi.

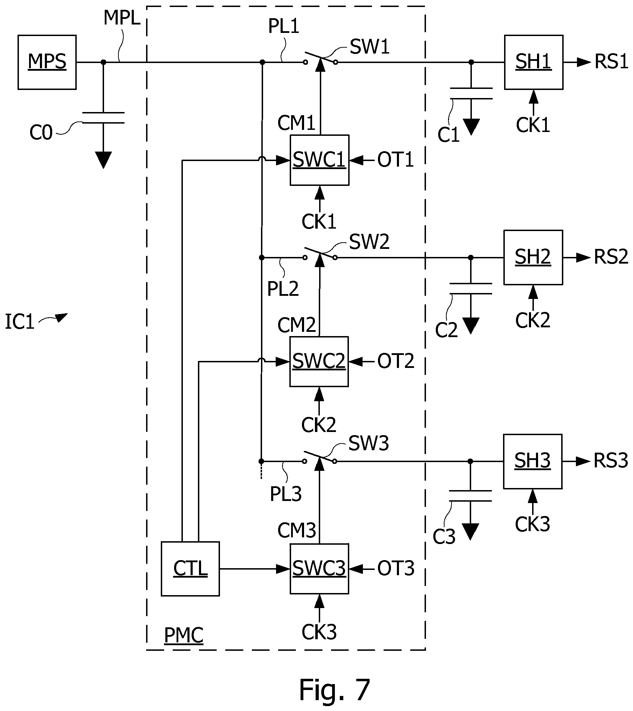

La figure 7 représente plusieurs composants SH1, SH2, SH3 du microcircuit IC1 devant être protégés contre des attaques de type SPA ou DPA. Chaque composant SH1, SH2, SH3 reçoit la tension d'alimentation Vp fournie par le circuit MPS sur une entrée d'alimentation reliée à la liaison d'alimentation principale MPL par l'intermédiaire d'une liaison d'alimentation locale PL1, PL2, PL3. L'entrée d'alimentation de chaque composant SH1, SH2, SH3 est reliée au plan de masse du microcircuit IC1 par l'intermédiaire d'un condensateur C1, C2, C3, respectivement. Les condensateurs C1, C2, C3 peuvent inclure les capacités parasites internes des composants SH1, SH2, SH3, respectivement. Selon un mode de réalisation, le circuit de contremesure PMC comprend un interrupteur SW1, SW2, SW3 interposé sur la liaison d'alimentation locale PL1, PL2, PL3 de chaque composant SH1, SH2, SH3, entre le nœud de jonction de la liaison d'alimentation locale avec la liaison d'alimentation principale MPL et le condensateur C1, C2, C3. En fonctionnement normal, les interrupteurs SW1, SW2, SW3 sont fermés. Les composants SH1, SH2, SH3 sont donc alimentés normalement par le circuit MPS. Lorsque l'un des interrupteurs SW1, SW2, SW3 est ouvert, le composant SH1, SH2, SH3 correspondant est alimenté temporairement par la décharge du condensateur C1, C2, C3 correspondant. Chacun des interrupteurs SW1, SW2, SW3 est commandé par un circuit de commande respectif SWC1, SWC2, SWC3 qui lui fournit un signal de commande CM1, CM2, CM3. Le circuit de contrôle CTL peut contrôler chacun des circuits de commande SWC1, SWC2, SWC3. Chacun des circuits de commande SWC1, SWC2, SWC3 peut recevoir un signal de commande permettant d'ajuster la durée d'ouverture OT1, OT2, OT3 de l'interrupteur SW1, SW2, SW3 correspondant. La durée d'ouverture OT1, OT2, OT3 de chaque interrupteur SW1, SW2, SW3 peut être déterminée en fonction du temps de décharge du condensateur C1, C2, C3 correspondant de manière à ce que pendant cette durée, la tension d'alimentation fournie par le condensateur soit suffisante pour maintenir opérationnel le composant SH1, SH1, SH3 correspondant. Chacun des circuits de commande SWC1, SWC2, SWC3 peut également recevoir un signal d'horloge respectif CK1, CK2, CK3 lui permettant de synchroniser l'ouverture de l'interrupteur SW1, SW2, SW3 correspondant avec les opérations réalisées par le composant SH1, SH2, SH3 correspondant.

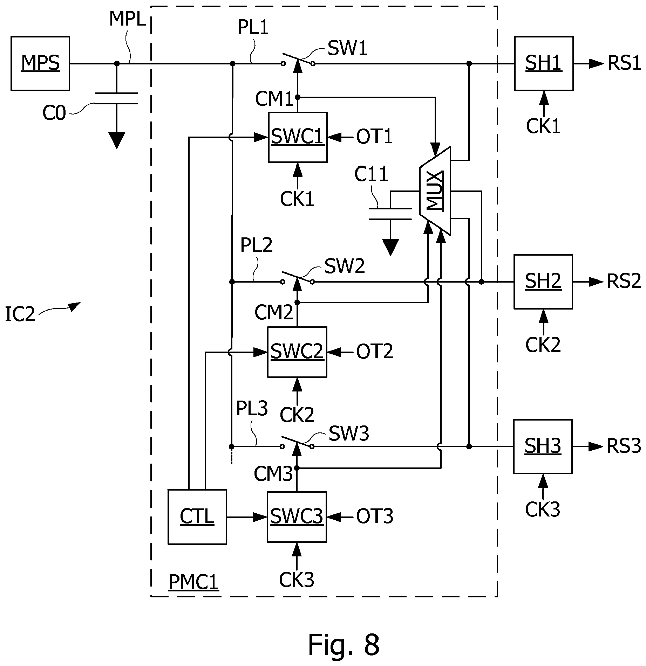

Les condensateurs de capacité relativement importante peuvent difficilement être miniaturisés dans un circuit intégré. Ainsi, avec les technologies actuelles de fabrication des circuits intégrés, un condensateur de 100 pF occupe une surface substrat en silicium de l'ordre de 100x100 µm. Pour limiter l'espace occupé par de tels condensateurs dans le circuit de contremesure, le circuit de la figure 7 peut être modifié afin de ne mettre en œuvre qu'un seul condensateur partagé par l'ensemble des composants à protéger. Ainsi, la figure 8 représente un microcircuit IC2, et en particulier un circuit d'alimentation du microcircuit IC2. Le circuit d'alimentation comprend le condensateur C0 et un circuit de contremesure PMC1 comprenant un seul condensateur C11 pour tous les composants SH1, SH2, SH3. Le condensateur C11 est connecté d'un côté au plan de masse et relié de l'autre côté, à chacune des liaisons d'alimentation locales PL1, PL2, PL3 par l'intermédiaire d'un multiplexeur MUX. Le multiplexeur MUX est commandé par les signaux de commande CM1, CM2, CM3 fournis par les circuits SWC1, SWC2, SWC3 aux interrupteurs SW1, SW2, SW3. Le multiplexeur MUX peut être configuré pour connecter le condensateur C11 à une et une seule des liaisons PL1, PL2, PL3 à la fois. Le circuit de contrôle CTL et/ou les circuits SWC1, SWC2, SWC3 peuvent être configurés pour que les signaux de commande CM1, CM2, CM3 déclenchent l'ouverture d'un seul des interrupteurs SW1, SW2, SW3 à la fois, et commandent le multiplexeur MUX pour qu'il relie le condensateur C11 au composant SH1, SH2, SH3 connecté à l'interrupteur SW1, SW2, SW3 ouvert. Le circuit de contrôle CTL et/ou les circuits SWC1, SWC2, SWC3 peuvent être configurés également pour respecter une durée minimum de fermeture entre deux ouvertures consécutives parmi les interrupteurs SW1, SW2, SW3, afin d'assurer la recharge du condensateur C11.

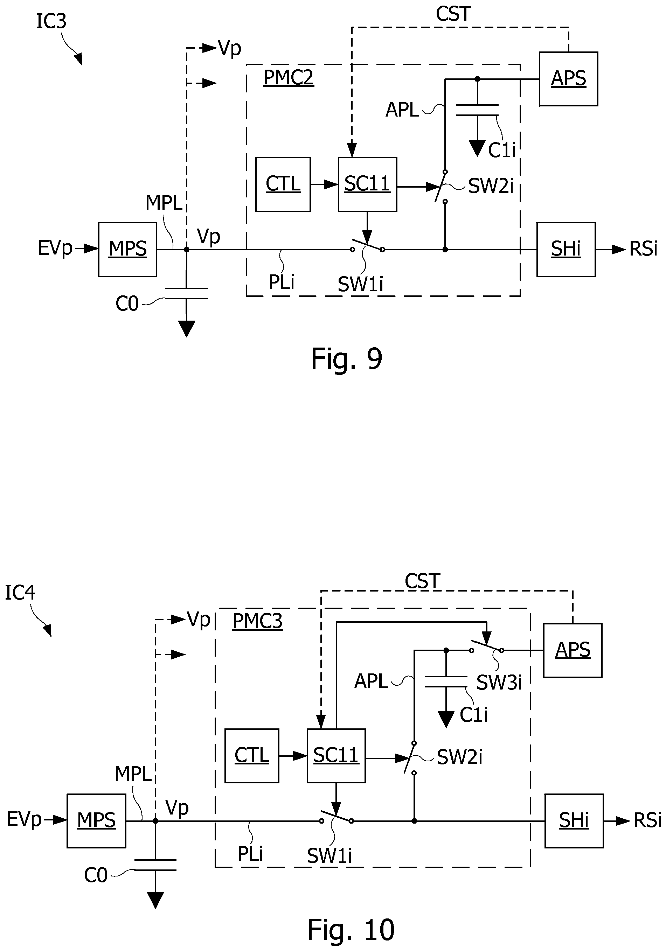

La figure 9 représente un microcircuit IC3 et en particulier un circuit d'alimentation d'un composant SHi du microcircuit IC3. Le circuit d'alimentation comprend le circuit d'alimentation MPS, le condensateur C0, un circuit de contremesure PMC2 et un autre circuit d'alimentation APS. Le circuit d'alimentation APS est configuré pour extraire de l'énergie d'une source d'énergie exploitant un phénomène physique tel qu'un rayonnement électromagnétique (lumière, ondes radio, champ magnétique, champ électrique), des mouvements, un gradient de température, etc. A cet effet, le circuit APS peut comprendre comme source d'énergie des circuits tels qu'une antenne, un capteur de mouvements, des cellules photosensibles, et des circuits tels qu'une pompe de charge et un régulateur de tension.

Le circuit PMC2 comprend un condensateur C1i, deux interrupteurs SW1i, SW2i commandés par un circuit de commande SC11, et un circuit de contrôle CTL. La ligne d'alimentation MPL connectée à une sortie d'alimentation du circuit MPS, est reliée à une entrée d'alimentation du composant SHi par l'intermédiaire de l'interrupteur SW1i. Une ligne d'alimentation APL relie une sortie d'alimentation du circuit APS à l'entrée d'alimentation du composant SHi, l'interrupteur SW2i étant interposé sur la ligne APL. Le condensateur C1i relie la sortie d'alimentation du circuit APL à la masse. Le circuit SC11 peut être configuré pour commander les interrupteurs SW1i, SW2i de manière à ce qu'à tout instant, un seul des interrupteurs SW1i et SW2i soit fermé lorsque le composant SHi est alimenté.

Selon un mode de réalisation, le circuit APS fournit un signal d'état de charge CST du condensateur C1i au circuit SC11 ou CTL. Ainsi, lorsque le composant SHi doit être alimenté, l'interrupteur SW2i peut être fermé par le circuit SC11 tant que le signal CST indique que le condensateur C1i est chargé, et ouvert tant que le signal CST indique que le condensateur C1i est déchargé ou en charge.

Si le circuit APS n'est pas totalement isolé à l'intérieur du microcircuit IC3, notamment parce qu'il doit être connecté à un port de connexion du microcircuit (par exemple destiné à être connecté à une antenne) et si l'activité du composant SHi peut être détectée sur ce port, notamment parce que le circuit APS n'offre pas une isolation suffisante, il peut être prévu un troisième interrupteur interposé sur la ligne APL. Ainsi, la figure 10 représente un microcircuit IC4 qui diffère du microcircuit IC3 uniquement en ce que le circuit de contremesure PMC3 comporte un troisième condensateur SW3i interposé entre la sortie d'alimentation du circuit APS et le nœud de connexion du condensateur C1i à la ligne APL. Le condensateur SW3i est commandé par le circuit SC11 de manière à être ouvert lorsque l'interrupteur SW2i est fermé et fermé lorsque l'interrupteur SW2i est ouvert.

Il apparaîtra clairement à l'homme de l'art que la présente invention est susceptible de diverses variantes de réalisation et diverses applications. En particulier, l'invention n'est pas limitée aux modes de réalisation décrits mais couvre également toutes les combinaisons possibles de ces modes de réalisation. En particulier, si le microcircuit de la figure 9 ou 10 comprend plusieurs composants à protéger, chacun de ces composants peut être associé à un condensateur C1i et à des interrupteurs SW1i et SW2 respectifs commandés par un circuit de commande tel que SC11. De même, les modes de réalisation des figures 8 et 9 ou 10 peuvent être combinés en ajoutant au multiplexeur MUX sur la figure 8 une entrée connectée au circuit d'alimentation APS de la figure 9 ou 10.

L'invention n'est pas non plus limitée à l'usage d'un condensateur pour stocker de l'énergie électrique et la restituer à un composant à protéger lorsque l'interrupteur disposé sur la liaison d'alimentation du composant est ouvert. Il peut en effet être envisagé d'intégrer dans le microcircuit une batterie rechargeable. Il importe simplement que pendant que le composant est alimenté par cette autre source d'énergie, celle-ci ne soit pas reliée à un contact à l'extérieur du microcircuit, à partir duquel une attaque DPA ou SPA peut être réalisée.

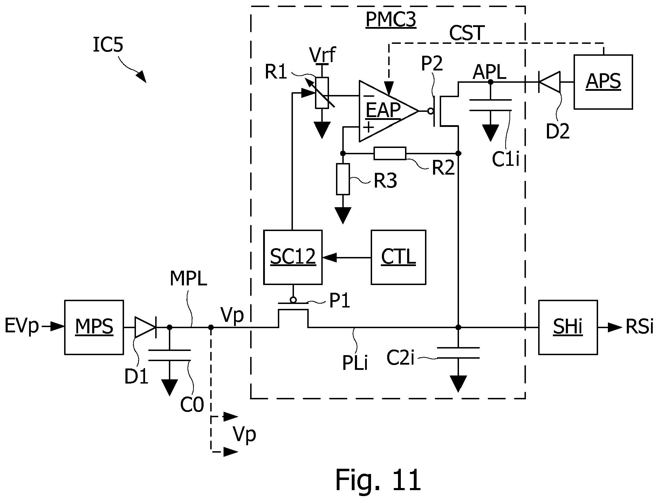

L'invention n'est pas non plus limitée à l'usage d'interrupteurs pour connecter les sources d'alimentation principale MPS et secondaire (telle que le condensateur Ci, C1i) à un composant à protéger interne au microcircuit. En effet, il peut être prévu des modes d'alimentation intermédiaires dans lesquels le composant à protéger est alimenté en partie par la source d'alimentation principale MPS et en partie par la source d'alimentation secondaire. Cette disposition permet d'atténuer la signature due à l'activité du composant à protéger, qui peut être détectée en analysant le courant fournit et consommé par le microcircuit. Cette disposition permet également d'allonger le temps de décharge de la source d'alimentation secondaire, et donc le temps pendant lequel le composant peut être alimenté partiellement par la source d'alimentation secondaire. La figure 11 représente à titre d'exemple un microcircuit IC5 comprenant un circuit de contremesure PMC3 pouvant mettre en œuvre de tels modes d'alimentation intermédiaires. Le circuit PMC3 comprend un circuit de contrôle CTL, un circuit de commande SC12, deux transistors MOS à canal P, P1, P2, le condensateur C1i, un amplificateur d'erreur EAP, un potentiomètre R1 commandé par le circuit de commande SC12, et deux résistances R2, R3. Le transistor P1 est interposé sur la ligne d'alimentation PLi du composant SHi et est commandé par le circuit SC12. Le transistor P2 est interposé sur la liaison APL entre le circuit d'alimentation APS et l'entrée d'alimentation du composant SHi, et est commandé par le signal de sortie de l'amplificateur EAP. Le condensateur C1i relie la sortie d'alimentation du circuit APS à la masse. L'entrée d'alimentation du composant SHi est reliée à une entrée directe de l'amplificateur EAP par l'intermédiaire de la résistance R2. L'entrée directe de l'amplificateur EAP est également reliée à la masse par l'intermédiaire de la résistance R3. L'amplificateur EAP comprend une entrée inverseuse reliée à une borne intermédiaire du potentiomètre R1 comprenant une borne d'extrémité recevant une tension de référence Vrf et une borne d'extrémité connectée à la masse. L'activation de l'amplificateur EAP est commandée par le signal CST d'état de charge CST du condensateur C1i de sorte que si l'état de charge du condensateur C1i est insuffisant, l'amplificateur EAP bloque le transistor P2. Les résistances R2, R3 forment un pont diviseur permettant de prélever une partie de la tension en sortie par le circuit d'alimentation et transmise par le transistor P2. Des diodes D1, D2 peuvent être prévues en sortie des circuits d'alimentation MPS, APS pour éviter une circulation inverse de courant. Un condensateur C2i peut relier l'entrée d'alimentation du composant SHi à la masse, à condition de présenter une faible capacité par rapport au condensateur C1i (par exemple inférieure à 1/10 de la capacité du condensateur C1i).

Le potentiomètre R1 permet d'ajuster l'amplitude et le signe de l'écart entre les tensions fournies en entrée de l'amplificateur EAP, de manière à ajuster le courant d'alimentation sur la ligne APL, transmis au composant SHi par le transistor P2, lorsque le transistor P1 est passant. Ainsi, si l'écart de tension en entrée de l'amplificateur EAP est positif, alors le courant fourni par le condensateur C1i est prédominant sur le courant fourni par le circuit d'alimentation MPS, pour alimenter le composant SHi. Au contraire, si l'écart de tension en entrée de l'amplificateur EAP est négatif, le courant fourni par le circuit d'alimentation est prédominant sur le courant fournit par le condensateur C1i, pour alimenter le composant SHi.

Par ailleurs, l'interrupteur interposé sur la ligne PLi d'alimentation principale du composant à protéger n'est pas nécessairement ouvert pendant l'exécution d'une opération sensible par le composant. En effet, un masquage de l'activité du composant pendant que celui-ci réalise des opérations non sensibles peut également perturber une attaque DPA ou SPA.

Les modes de réalisation qui n'entrent pas dans le cadre des revendications indépendantes doivent être considérés uniquement comme des exemples.

## Revendications

1. Procédé de contremesure dans un microcircuit (IC1), le procédé comprenant des étapes consistant à :
sélectionner par le microcircuit, à chaque cycle d'un signal d'horloge (CK) un mode d'alimentation d'un composant (SHi) interne au microcircuit, parmi un premier mode d'alimentation dans lequel le composant est totalement alimenté par un premier circuit d'alimentation (MPS) connecté à une entrée d'alimentation (PWI) du microcircuit, et au moins un second mode d'alimentation dans lequel le composant est au moins partiellement alimenté par un second circuit d'alimentation (Ci, C1i) interne au microcircuit, le second circuit d'alimentation étant isolé de l'extérieur du microcircuit pendant qu'il alimente le composant,
charger un condensateur (C1i) du second circuit d'alimentation par une source d'énergie (APS) interne au microcircuit, pendant que le premier mode d'alimentation est sélectionné, et
décharger le condensateur pour alimenter le composant pendant que le second mode d'alimentation est sélectionné.

2. Procédé selon la revendication 1, dans lequel le composant (SHi) est alimenté par le second circuit d'alimentation (Ci, C1i) à des cycles du signal d'horloge (CK) déterminés aléatoirement, ou en fonction de l'état de charge d'un condensateur (Ci) du second circuit d'alimentation, ou bien en fonction d'un critère de sensibilité d'opérations exécutées à chaque cycle du signal d'horloge.

3. Procédé selon la revendication 1 ou 2, dans lequel le signal d'horloge (CK) est fourni au composant (SHi) pour cadencer des opérations exécutées par le composant.

4. Procédé selon l'une des revendications 1 à 3, dans lequel le second mode d'alimentation est sélectionné pendant une durée (OT) inférieure à la durée d'un cycle du signal d'horloge (CK) moins un temps de charge du condensateur.

5. Procédé selon l'une des revendications 1 à 4, dans lequel un premier interrupteur (SWi, SW1i) est interposé sur une liaison d'alimentation (PLi) du composant (SHi), connectée au premier circuit d'alimentation (MPS), le procédé comprenant une étape de charge d'un condensateur (Ci) du second circuit d'alimentation lorsque le premier interrupteur est fermé, et de décharge du condensateur pour alimenter le composant lorsque le premier interrupteur est ouvert.

6. Procédé selon l'une des revendications 4 à 5, dans lequel un second interrupteur (SW2i) est interposé sur une liaison d'alimentation (APL) reliant le second circuit d'alimentation à une entrée d'alimentation du composant (SHi), le condensateur (C1i) étant chargé par la source d'énergie (APS) interne au microcircuit (IC3, IC4) lorsque le second interrupteur est ouvert, et déchargé pour alimenter le composant lorsque le second interrupteur est fermé.

7. Procédé selon l'une des revendications 4 à 6, comprenant des étapes consistant à :
exécuter par le composant (SHi) plusieurs fois une opération avec le premier interrupteur (SWi) ouvert pendant des durées différentes, le condensateur (Ci) étant dans un état chargé lors de l'ouverture du premier interrupteur,
à chaque exécution de l'opération, mémoriser une donnée (RSi) fournie par le circuit de calcul (SHi), et
déterminer une durée maximum (OT) pendant laquelle le premier interrupteur peut être ouvert sans perturber l'exécution de l'opération en comparant les données mémorisées.

8. Procédé selon l'une des revendications 1 à 7, comprenant des étapes consistant à définir et stocker dans un registre (RG1, RG2) un mot de commande comportant un bit de commande par cycle d'un ensemble de cycles du signal d'horloge (CK), et à sélectionner l'un ou l'autre des premier et second modes d'alimentation, selon la valeur du bit de commande dans le registre, correspondant au cycle d'horloge en cours.

9. Microcircuit comprenant :
un composant (SHi),
un premier circuit d'alimentation (MPS) connecté à une entrée d'alimentation (PWI) du microcircuit (IC1),
un second circuit d'alimentation (Ci, C1i) interne au microcircuit, et
un circuit de commande (SWC, CTL) configuré pour mettre en œuvre le procédé selon l'un des revendications 1 à 8.

10. Microcircuit selon la revendication 9, comprenant un premier interrupteur (SWi) interposé sur une ligne d'alimentation (PLi) du composant (SHi), et qui est fermé par le circuit de commande (SWC, CTL) pour alimenter le composant par le premier circuit d'alimentation (MPS), et ouvert par le circuit de commande pour alimenter le composant par le second circuit d'alimentation (Ci).

11. Microcircuit selon la revendication 10, dans lequel le second circuit d'alimentation comprend un premier condensateur (Ci) qui est chargé pendant que le premier interrupteur (SWi) est fermé, et qui alimente le composant (SHi) en se déchargeant pendant que le premier interrupteur est ouvert.

12. Microcircuit selon la revendication 11, comprenant un second interrupteur (SW2i) interposé sur une liaison d'alimentation reliant le second circuit d'alimentation (APL) à une entrée d'alimentation du composant (SHi), le premier condensateur (C1i) étant chargé par une source d'énergie (APS) interne au microcircuit (IC3, IC4) lorsque le second interrupteur est ouvert, et déchargé pour alimenter le composant lorsque le second interrupteur est fermé.

13. Microcircuit selon l'une des revendications 10 à 12, comprenant un registre (RG1, RG2) pour mémoriser un mot de commande comportant au moins un bit, l'état du bit indiquant si le premier interrupteur (SWi) doit être ouvert ou fermé durant un cycle de calcul d'un ensemble de cycles de calcul exécutés par le composant (SHi).

14. Microcircuit selon l'une des revendications 9 à 13, comprenant plusieurs composants (SH1, SH2, SH3) comprenant chacun une entrée d'alimentation reliée au premier circuit d'alimentation (MPL) par l'intermédiaire d'un interrupteur respectif (SW1, SW2, SW3), un condensateur (C1, C2, C3) étant connecté à chaque entrée d'alimentation, chaque interrupteur étant commandé en fonction des opérations exécutées par le composant connecté à l'interrupteur.

15. Microcircuit selon l'une des revendications 9 à 13, comprenant plusieurs composants (SH1, SH2, SH3) comprenant chacun une entrée d'alimentation reliée au premier circuit d'alimentation (MPS) par l'intermédiaire d'un interrupteur respectif (SW1, SW2, SW3), un condensateur (C11) étant relié par l'intermédiaire d'un circuit de commutation (MUX) à chaque entrée d'alimentation de composant, chaque interrupteur étant commandé en fonction des opérations exécutées par le composant connecté à l'interrupteur, le circuit de commutation étant configuré pour relier le condensateur à l'une des entrées d'alimentation de composant lorsque l'interrupteur connecté à cette entrée d'alimentation est ouvert.

## Patentansprüche

1. Gegenmaßnahmenverfahren in einer Mikroschaltung (IC1), wobei das Verfahren die folgenden Schritte umfasst:
Auswählen durch die Mikroschaltung, bei jedem Zyklus eines Taktsignals (CK), eines Stromversorgungsmodus einer Komponente (SHi) innerhalb der Mikroschaltung aus einem ersten Stromversorgungsmodus, in dem die Komponente vollständig von einer ersten Stromversorgungsschaltung (MPS) mit Strom versorgt wird, die mit einem Stromversorgungseingang (PWI) der Mikroschaltung verbunden ist, und mindestens einem zweiten Stromversorgungsmodus, in dem die Komponente zumindest teilweise von einer zweiten Stromversorgungsschaltung (Ci, C1i) innerhalb der Mikroschaltung mit Strom versorgt wird, wobei die zweite Stromversorgungsschaltung von der Außenseite der Mikroschaltung isoliert ist, während sie die Komponente mit Strom versorgt,
Aufladen eines Kondensators (C1i) der zweiten Stromversorgungsschaltung durch eine Stromquelle (APS) innerhalb der Mikroschaltung, während der erste Stromversorgungsmodus ausgewählt ist, und
Entladen des Kondensators, um die Komponente zu versorgen, während der zweite Stromversorgungsmodus ausgewählt ist.

2. Verfahren nach Anspruch 1, wobei die Komponente (SHi) von der zweiten Stromversorgungsschaltung (Ci, C1i) in zufällig festgelegten Zyklen des Taktsignals (CK) mit Strom versorgt wird, oder entsprechend des Ladezustands eines Kondensators (Ci) der zweiten Stromversorgungsschaltung oder gemäß einem Empfindlichkeitskriterium von Operationen, die bei jedem Zyklus des Taktsignals ausgeführt werden, versorgt wird.

3. Verfahren nach Anspruch 1 oder 2, wobei das Taktsignal (CK) der Komponente zugeführt wird (SHi), um von der Komponente ausgeführte Operationen zu takten.

4. Verfahren nach einem der Ansprüche 1 bis 3, wobei der zweite Stromversorgungsmodus während einer Dauer (OT) kürzer als die Dauer eines Taktsignalzyklus (CK) abzüglich einer Zeit der Aufladung des Kondensators ausgewählt wird.

5. Verfahren nach einem der Ansprüche 1 bis 4, wobei ein erster Schalter (SWi, SW1i) in einer Stromversorgungsverbindung (PLi) der Komponente (SHi), die mit der ersten Stromversorgungsschaltung (MPS) verbunden ist, zwischengeschaltet ist, wobei das Verfahren einen Schritt zum Laden eines Kondensators (Ci) der zweiten Stromversorgungsschaltung, wenn der erste Schalter geschlossen ist, und zum Entladen des Kondensators, um die Komponente mit Strom zu versorgen, wenn der erste Schalter offen ist, umfasst.

6. Verfahren nach einem der Ansprüche 4 bis 5, wobei ein zweiter Schalter (SW2i) in einer Stromversorgungsverbindung (APL), die die zweite Stromversorgungsschaltung mit einem Stromversorgungseingang der Komponente (SHi) verbindet, zwischengeschaltet ist, wobei der Kondensator (C1i) von der Stromquelle (APS) innerhalb der Mikroschaltung (IC3, IC4) geladen wird, wenn der zweite Schalter offen ist, und entladen wird, um die Komponente zu versorgen, wenn der zweite Schalter geschlossen ist.

7. Verfahren nach einem der Ansprüche 4 bis 6, umfassend die folgenden Schritte:
mehrmaliges Ausführen einer Operation durch die Komponente (SHi), wobei der erste Schalter (SWi) für verschiedene Zeiträume offen ist, wobei sich der Kondensator (Ci) bei Öffnen des ersten Schalters in einem geladenen Zustand befindet,
bei jeder Ausführung der Operation Speichern eines von der Berechnungsschaltung (SHi) gelieferten Datenelements (RSi), und
Bestimmen einer maximalen Dauer (OT), während der der erste Schalter geöffnet sein kann, ohne die Ausführung der Operation zu stören, durch Vergleichen der gespeicherten Daten.

8. Verfahren nach einem der Ansprüche 1 bis 7, umfassend die Schritte des Definierens und Speicherns in einem Register (RG1, RG2) eines Steuerwortes, umfassend ein Steuerbit pro Zyklus eines Satzes von Zyklen des Taktsignals (CK), und des Auswählens des einen oder des anderen des ersten und des zweiten Stromversorgungsmodus gemäß dem Wert des Steuerbits in dem Register, der dem aktuellen Taktzyklus entspricht.

9. Mikroschaltung, umfassend:
eine Komponente (SHi), eine erste Stromversorgungsschaltung (MPS), die mit einem Stromversorgungseingang (PWI) der Mikroschaltung (IC1) verbunden ist, eine zweite Stromversorgungsschaltung (Ci, C1i) innerhalb der Mikroschaltung und eine Steuerschaltung (SWC, CTL), die dafür ausgelegt ist, das Verfahren nach einem der Ansprüche 1 bis 8 durchzuführen.

10. Mikroschaltung nach Anspruch 9, umfassend einen ersten Schalter (SWi), der in einer Stromversorgungsleitung (PLi) der Komponente (SHi) zwischengeschaltet ist und von der Steuerschaltung (SWC, CTL) zum Versorgen der Komponente mit Strom von der ersten Stromversorgungsschaltung (MPS) geschlossen wird und von der Steuerschaltung zum Versorgen der Komponente mit Strom von der zweiten Stromversorgungsschaltung (Ci) geöffnet wird.

11. Mikroschaltung nach Anspruch 10, wobei die zweite Stromversorgungsschaltung einen ersten Kondensator (Ci) umfasst, der geladen wird, während der erste Schalter (SWi) geschlossen ist, und der die Komponente (SHi) mit Strom versorgt, während er sich entlädt, während der erste Schalter offen ist.

12. Mikroschaltung nach Anspruch 11, umfassend einen zweiten Schalter (SW2i), der in einer Stromversorgungsleitung zwischengeschaltet ist, die die zweite Stromversorgungsschaltung (APL) mit einem Stromversorgungseingang der Komponente (SHi) verbindet, wobei der erste Kondensator (C1i) von einer Energiequelle (APS) innerhalb der Mikroschaltung (IC3, IC4) geladen wird, wenn der zweite Schalter offen ist, und entladen wird, um die Komponente mit Strom zu versorgen, wenn der zweite Schalter geschlossen ist.

13. Mikroschaltung nach einem der Ansprüche 10 bis 12, umfassend ein Register (RG1, RG2), um ein Steuerwort zu speichern, das mindestens ein Bit aufweist, wobei der Zustand des Bits angibt, ob der erste Schalter (SWi) während eines Berechnungszyklus eines Satzes von Berechnungszyklen, die von der Komponente (SHi) ausgeführt werden, geöffnet oder geschlossen sein soll.

14. Mikroschaltung nach einem der Ansprüche 9 bis 13, umfassend mehrere Komponenten (SH1, SH2, SH3), die jeweils einen Stromversorgungseingang umfassen, der mit der ersten Stromversorgungsschaltung (MPS) über einen jeweiligen Schalter (SW1, SW2, SW3) verbunden ist, wobei an jedem Stromversorgungseingang ein Kondensator (C1, C2, C3) angeschlossen ist, wobei jeder Schalter gemäß den Operationen gesteuert wird, die von der an den Schalter angeschlossenen Komponente ausgeführt werden.

15. Mikroschaltung nach einem der Ansprüche 9 bis 13, umfassend mehrere Komponenten (SH1, SH2, SH3), die jeweils einen Stromversorgungseingang aufweisen, der mit der ersten Stromversorgungsschaltung (MPS) über einen jeweiligen Schalter (SW1, SW2, SW3) verbunden ist, wobei ein Kondensator (C11) über einen Kommutierungskreis (MUX) mit jedem Stromversorgungseingang der Komponente verbunden ist, wobei jeder Schalter gemäß den Operationen gesteuert wird, die von der an den Schalter angeschlossenen Komponente ausgeführt werden, wobei der Kommutierungskreis dafür ausgelegt ist, den Kondensator mit einem der Stromversorgungseingänge der Komponente zu verbinden, wenn der mit diesem Stromversorgungseingang verbundene Schalter offen ist.

## Claims

1. A countermeasure method implemented in a microcircuit (IC1), the method comprising steps of:
selecting, by the microcircuit, at each cycle of a clock signal (CK) a supply mode of a component (SHi) internal to the microcircuit, from among a first supply mode in which the component is fully supplied by a first supply circuit (MPS) connected to a supply input (PWI) of the microcircuit, and at least one second supply mode in which the component is at least partially supplied by a second supply circuit (Ci, C1i) internal to the microcircuit, the second supply circuit being isolated from the exterior of the microcircuit while it is supplying the component,
charging a capacitor (C1i) of the second supply circuit by a source of energy (APS) internal to the microcircuit, while the first supply mode is selected, and
discharging the capacitor to supply the component while the second supply mode is selected.

2. The method according to claim 1, wherein the component (SHi) is supplied by the second supply circuit (Ci, C1i) at cycles of the clock signal (CK) determined randomly, or depending on the state of charge of a capacitor (Ci) of the second supply circuit, or depending on a criterion of sensitivity of operations executed upon each cycle of the clock signal.

3. The method according to claim 1 or 2, wherein the component (SHi) is provided with the clock signal (CK) to pace operations executed by the component.

4. The method according to one of claims 1 to 3, wherein the second supply mode is selected for a time (OT) that is shorter than the time of a cycle of the clock signal (CK) minus a charge time for charging the capacitor.

5. The method according to one of claims 1 to 4, wherein a first switch (SWi, SW1i) is interposed on a supply connection (PLi) of the component (SHi), connected to the first supply circuit (MPS), the method comprising a step of charging a capacitor (Ci) of the second supply circuit when the first switch is closed, and of discharging the capacitor to supply the component when the first switch is open.

6. The method according to one of claims 4 to 5, wherein a second switch (SW2i) is interposed on a supply connection (APL) linking the second supply circuit to a supply input of the component (SHi), the capacitor (C1i) being charged by the source of energy (APS) internal to the microcircuit (IC3, IC4) when the second switch is open, and discharged to supply the component when the second switch is closed.

7. The method according to one of claims 4 to 6, comprising steps of:
the component (SHi) executing several times an operation with the first switch (SWi) open for different times, the capacitor (Ci) being in a charged state when the first switch is open,
upon each execution of the operation, storing a datum (RSi) provided by the calculation circuit (SHi), and
determining a maximum time (OT) for which the first switch can be open without disturbing the execution of the operation by comparing the stored data.

8. The method according to one of claims 1 to 7, comprising steps of defining and storing in a register (RG1, RG2) a control word comprising one control bit per cycle of a set of cycles of the clock signal (CK), and of selecting one or other of the first and second supply modes, according to the value of the control bit in the register, corresponding to the clock cycle in progress.

9. A microcircuit comprising:
a component (SHi),
a first supply circuit (MPS) connected to a supply input (PWI) of the microcircuit (IC1),
a second supply circuit (Ci, C1i) internal to the microcircuit, and
a control circuit (SWC, CTL) configured to implement the method according to one of claims 1 to 8.

10. The microcircuit according to claim 9, comprising a first switch (SWi) interposed on a supply line (PLi) of the component (SHi), and which is closed by the control circuit (SWC, CTL) to supply the component by the first supply circuit (MPS), and opened by the control circuit to supply the component by the second supply circuit (Ci).

11. The microcircuit according to claim 10, wherein the second supply circuit comprises a first capacitor (Ci) that is charged while the first switch (SWi) is closed, and which supplies the component (SHi) by discharging while the first switch is open.

12. The microcircuit according to claim 11, comprising a second switch (SW2i) interposed on a supply connection linking the second supply circuit (APL) to a supply input of the component (SHi), the first capacitor (C1i) being charged by a source of energy (APS) internal to the microcircuit (IC3, IC4) when the second switch is open, and discharged to supply the component when the second switch is closed.

13. The microcircuit according to one of claims 10 to 12, comprising a register (RG1, RG2) for storing a control word comprising at least one bit, the status of the bit indicating whether the first switch (SWi) must be opened or closed during a calculation cycle of a set of calculation cycles executed by the component (SHi).

14. The microcircuit according to one of claims 9 to 13, comprising several components (SH1, SH2, SH3) each comprising a supply input coupled to the first supply circuit (MPL) through a respective switch (SW1, SW2, SW3), a capacitor (C1, C2, C3) being connected to each supply input, each switch being controlled according to the operations executed by the component connected to the switch.

15. The microcircuit according to one of claims 9 to 13, comprising several components (SH1, SH2, SH3) each comprising a supply input coupled to the first supply circuit (MPS) through a respective switch (SW1, SW2, SW3), a capacitor (C11) being coupled through a switch circuit (MUX) to each component supply input, each switch being controlled according to the operations executed by the component connected to the switch, the switch circuit being configured to couple the capacitor to one of the component supply inputs when the switch connected to this supply input is open.
